# EUROPÄISCHE PATENTSCHRIFT

(11) **EP 4 341 113 B1**
(45) Veröffentlichungstag und Bekanntmachung des Hinweises auf die Patenterteilung: **04.03.2026**
(21) Anmeldenummer: 22728499.9
(22) Anmeldetag: 10.05.2022
(51) Int. Cl.: B60K 1/00, B60K 17/06, B60K 17/346

(54) **ANTRIEBSEINRICHTUNG FÜR EINEN KRAFTFAHRZEUGANTRIEBSSTRANG EINES ELEKTROFAHRZEUGS**
DRIVE DEVICE FOR A MOTOR VEHICLE DRIVE TRAIN OF AN ELECTRIC VEHICLE
DISPOSITIF D'ENTRAÎNEMENT POUR UNE CHAÎNE CINÉMATIQUE DE VÉHICULE AUTOMOBILE D'UN VÉHICULE ÉLECTRIQUE

(30) Priorität: 20.05.2021 DE 102021205128
(43) Veröffentlichungstag der Anmeldung: 27.03.2024
(73) Patentinhaber: ZF Friedrichshafen AG, 88046 Friedrichshafen (DE)
(72) Erfinder: BRILKA, Tobias, 94547 Iggensbach (DE); REITINGER, Franz, 4092 Esternberg (AT); MÜHLBAUER, Alexander, 94575 Windorf (DE); PFEFFER, Andreas, 94234 Viechtach (DE); WITTROCK, Tobias, 94036 Passau (DE)
(74) Vertreter: ZF Friedrichshafen AG
(86) Internationale Anmeldenummer: PCT/EP2022/062576
(87) Internationale Veröffentlichungsnummer: WO 2022/243104

(56) Entgegenhaltungen:
- EP-A1- 3 812 617
- WO-A1-2012/007030
- DE-A1- 102016 006 208
- DE-A1- 102016 217 920
- US-A1- 2009 264 246
- US-B1- 6 250 411

## Beschreibung

Die Erfindung betrifft Antriebseinrichtung für einen Kraftfahrzeugantriebsstrang eines Elektrofahrzeugs, umfassend mindestens eine Elektromaschine als Antriebsmaschine, der abtriebsseitig ein Getriebe nachgeschaltet ist, wobei bei dem Getriebe eine Eingangsseite und eine Ausgangsseite unter Achsversatz zueinander liegen, und wobei die Ausgangsseite des Getriebes mit einer Verteilereinrichtung in Verbindung steht, welcher zumindest zwei Abtriebe zugeordnet sind, die im Kraftfahrzeugantriebsstrang jeweils der Anbindung je einer Antriebsachse des Elektrofahrzeugs dienen. Des Weiteren betrifft die Erfindung einen Kraftfahrzeugantriebsstrang mit einer vorgenannten Antriebseinrichtung sowie ein Elektrofahrzeug.

Bei Elektrofahrzeugen sind Antriebseinrichtungen bekannt, die sich häufig aus mindestens einer Elektromaschine und einem oder mehreren nachgeschalteten Getriebe zusammensetzen. Teilweise können dabei unterschiedliche Gänge geschaltet werden, um eine Antriebsbewegung der mindestens einen Elektromaschine mit unterschiedlichen Übersetzungsverhältnissen zu übersetzen. Teil einer derartigen Antriebseinrichtung kann dabei auch eine Verteilereinrichtung sein, über die eine Verteilung einer durch die mindestens eine Elektromaschine hervorgerufenen und durch das oder die nachgeschalteten Getriebe übersetzten Antriebsbewegung auf mehrere Abtriebe vorgenommen wird.

Aus der DE 10 2016 006 208 A1 geht eine Antriebseinrichtung für einen Kraftfahrzeugantriebsstrang hervor, welcher für ein Elektrofahrzeug in Form eines Nutzfahrzeuges ausgestaltet ist. Dieser Antriebseinrichtung umfasst dabei eine oder mehrere Elektromaschinen, denen ein Getriebe nachgeschaltet ist. Die Antriebseinrichtung der DE 10 2016 006 208 A1 ist dabei für die Anordnung zwischen Längsträgern eines Fahrzeugrahmens des Elektrofahrzeuges ausgestaltet, wobei das Getriebe im verbauten Zustand der Antriebseinrichtung an einem, sich zwischen den Längsträgern erstreckenden Querträger befestigt ist. Bei einer Variante ist die Antriebseinrichtung dabei zum Antrieb mehrere Antriebsachsen des Elektrofahrzeuges ausgebildet, wobei die Antriebseinrichtung hierfür mit zwei Abtrieben ausgestattet ist. Die Abtriebe liegen dabei in Querrichtung des Elektrofahrzeugs versetzt zu der oder den Elektromaschinen, so dass über das Getriebe eine Übersetzung einer jeweiligen Antriebsbewegung mit Achsversatz und unter Verteilung auf die beiden Abtriebe stattfindet.

Die DE 10 2016 006 208 A1 beschreibt ein batterieelektrisch betriebenes Nutzfahrzeug, insbesondere einen Lastkraftwagen, umfassend einen Leiterrahmen mit zwei Längsträgern, die durch Querträger miteinander verbunden sind, ein Getriebe und mindestens eine am Getriebe angeordnete, generatorisch und motorisch betreibbare elektrische Maschine, die über das Getriebe antriebsmäßig mit mindestens einer Achse des Nutzfahrzeugs verbindbar ist. Das Getriebe ist hierbei an einem Querträger des Leiterrahmens befestigt.

Ausgehend vom vorstehend beschriebenen Stand der Technik ist es nun die Aufgabe der vorliegenden Erfindung, eine Antriebseinrichtung zu realisieren, welche für ein geländegängiges Elektrofahrzeug geeignet ist.

Diese Aufgabe wird ausgehend vom Oberbegriff des Anspruchs 1 in Verbindung mit dessen kennzeichnenden Merkmalen gelöst. Die hierauf folgenden, abhängigen Ansprüche geben jeweils vorteilhafte Weiterbildungen der Erfindung wieder. Ein Kraftfahrzeugantriebsstrang, welcher eine erfindungsgemäße Antriebseinrichtung aufweist, ist ferner Gegenstand der Ansprüche 10 und 11. Zudem betrifft Anspruch 12 ein Elektrofahrzeug mit einem entsprechenden Kraftfahrzeugantriebsstrang.

Gemäß der Erfindung umfasst eine Antriebseinrichtung mindestens eine Elektromaschine als Antriebsmaschine, der abtriebsseitig ein Getriebe nachgeschaltet ist. Bei dem Getriebe liegen eine Eingangsseite und eine Ausgangsseite unter Achsversatz zueinander, wobei die Ausgangsseite des Getriebes mit einer Verteilereinrichtung in Verbindung steht, welcher zumindest zwei Abtriebe zugeordnet sind, die im Kraftfahrzeugantriebsstrang jeweils der Anbindung je einer Antriebsachse des Elektrofahrzeugs dienen.

Bei der erfindungsgemäßen Antriebseinrichtung ist mindestens eine Elektromaschine vorgesehen, welche insbesondere je einen Rotor und je einen Stator aufweist.

Bevorzugt kann die mindestens eine Elektromaschine dabei zum einen in einem generatorischen Betrieb arbeiten, in welchem sie durch Antreiben des jeweiligen Rotors Strom erzeugt, wobei die mindestens eine Elektromaschine zum anderen in einem elektromotorischen Betrieb betreibbar ist, in dem sie durch Versorgung mit Strom selbst eine Antriebsbewegung des jeweiligen Rotors erzeugt. Im Sinne der Erfindung ist bei der Antriebseinrichtung dabei insbesondere genau eine Elektromaschine vorgesehen, wobei die erfindungsgemäße Antriebseinrichtung alternativ dazu aber auch mehrere Elektromaschinen aufweisen kann.

Innerhalb der erfindungsgemäßen Antriebseinrichtung ist der mindestens einen Elektromaschine abtriebsseitig ein Getriebe nachgeschaltet, welches mit einer Eingangsseite und eine Ausgangsseite ausgestattet ist. Dabei liegen die Eingangsseite und die Ausgangsseite des Getriebes unter einem Achsversatz zueinander, d.h. die Eingangsseite und die Ausgangsseite sind unter einem Achsabstand zueinander auf Achsen platziert, die bevorzugt parallel zueinander liegen. Bevorzugt sind die Eingangsseite und die Ausgangsseite des Getriebes permanent miteinander gekoppelt, so dass auch eine an der Eingangsseite in das Getriebe eingeleitete Antriebsbewegung stets zu der Ausgangsseite des Getriebes übertragen wird.

An der Eingangsseite des Getriebes ist dabei eine Verbindung zu der mindestens einen, vorgeschalteten Elektromaschine hergestellt, wobei diese Verbindung dabei als permanente Verbindungen vorliegen kann, so dass ein jeweiliger Rotor der mindestens einen Elektromaschine und die Eingangsseite des Getriebes nicht unabhängig voneinander rotieren können. Alternativ dazu kann die Verbindung zwischen der Eingangsseite des Getriebes und der mindestens einen Elektromaschine aber auch trennbar sein, wodurch die mindestens eine Elektromaschine von der Eingangsseite des Getriebes entkoppelt werden kann.

Das Getriebe ist an seiner Ausgangsseite mit einer Verteilereinrichtung verbunden, wobei dieser Verteilereinrichtung mehrere Abtriebe zugeordnet sind. Dabei ist die Verteilereinrichtung bei der erfindungsgemäßen Antriebseinrichtung dafür vorgesehen, eine über die Ausgangsseite des Getriebes in die Verteilereinrichtung eingeleitete Antriebsleistung permanent oder nur bei bestimmter Betätigung auf die mehreren Abtriebe zu verteilen, wobei im letztgenannten Fall dabei insbesondere zumindest ein Abtrieb über die Verteilereinrichtung permanent mit der Ausgangsseite des Getriebes gekoppelt ist. Die Abtriebe der Antriebseinrichtung sind dabei dazu ausgebildet, in einem verbauten Zustand der Antriebseinrichtung in einem Kraftfahrzeugantriebsstrang je eine Verbindung zu jeweils einer Antriebsachse des Elektrofahrzeugs herzustellen. Insofern ist die erfindungsgemäße Antriebseinrichtung für die Anwendung bei einem Elektrofahrzeug mit einem permanenten Allradantrieb oder einem zuschaltbaren Allradantrieb konzipiert.

Die Erfindung umfasst nun die technische Lehre, dass die Ausgangsseite des Getriebes in einer Hochrichtung gegenüber der Eingangsseite des Getriebes nach unten versetzt liegt. Mit anderen Worten ist der Achsversatz zwischen der Eingangsseite und der Ausgangsseite des Getriebes so gewählt, dass die Ausgangsseite relativ zu der Eingangsseite in Hochrichtung und damit vertikal unterhalb der Eingangsseite platziert ist. Ebenso ist ein seitlich geneigter Einbau der Antriebseinrichtung möglich.

Alternativ kann das Getriebe auch gedreht eingebaut werden, so dass die Eingangsseite relativ zu der Ausgangsseite in Hochrichtung und damit vertikal unterhalb der Ausgangsseite platziert ist.

Eine derartige Ausgestaltung einer Antriebseinrichtung hat dabei den Vorteil, dass aufgrund des Achsversatzes zwischen Eingangswelle und Ausgangswelle in Hochrichtung bei Anwendung der Antriebseinrichtung in einem Kraftfahrzeugantriebsstrang antriebsseitige Komponenten weiter oben liegend angeordnet werden können, was eine entsprechende Bodenfreiheit bei dem Elektrofahrzeug zur Folge hat. In der Folge kann somit auch eine für die Realisierung eines geländegängigen Elektrofahrzeugs geforderte Bodenfreiheit verwirklicht werden. Gleichzeitig kann dabei über die Antriebseinrichtung ein zentraler Antrieb mehrerer Antriebsachsen vorgenommen werden, so dass ein Elektrofahrzeug mit permanentem Allradantrieb oder zuschaltbaren Allradantrieb realisierbar ist.

Hingegen wird bei der Antriebseinrichtung der DE 10 2016 006 208 A1 ein Achsversatz in Querrichtung vorgenommen, was bei Anwendung der Antriebseinrichtung in einem Kraftfahrzeugantriebsstrang keine Steigerung der Bodenfreiheit zur Folge hat.

Entsprechend einer Ausführungsform der Erfindung ist zwischen der mindestens einen Elektromaschine und dem Getriebe ein Mehrganggetriebe vorgesehen, über welches unterschiedliche Übersetzungsverhältnisse zwischen einer jeweiligen Abtriebsseite der mindestens einen Elektromaschine und der Eingangsseite des Getriebes geschaltet werden können. In vorteilhafter Weise kann hierdurch eine Antriebsbewegung der mindestens einen Elektromaschine mit unterschiedlichen Übersetzungsverhältnissen auf die Eingangsseite des Getriebes übersetzt werden, wodurch mit der mindestens einen Elektromaschine ein größerer Fahrbereich abgedeckt werden kann. Das Mehrganggetriebe kann dabei zur Darstellung der unterschiedlichen Übersetzungsverhältnisse Planetenradsätze und/oder Stirnradstufen aufweisen, wobei die unterschiedlichen Übersetzungsverhältnisse bevorzugt durch selektive Betätigung je zugehöriger Schaltelemente geschaltet werden. Diese Schaltelemente können dabei im Rahmen der Erfindung als formschlüssige Schaltelemente, beispielsweise als unsynchronisierte Klauenschaltelemente oder Sperrsynchronisation, vorliegen oder auch als kraftschlüssige Schaltelemente ausgeführt sein, beispielsweise in Form von Lamellenschaltelement. Auch eine Ansynchronisierung über die Motorsteuerung beim Schaltvorgang ist möglich.

Sind bei der erfindungsgemäßen Antriebseinrichtung mehrere Elektromaschinen vorgesehen, so ist zwischen dem Getriebe und den Elektromaschinen bevorzugt ein Mehrganggetriebe vorgesehen, über welches die Elektromaschinen einzeln oder auch gemeinsam mit dem nachgeschalteten Getriebe unter Darstellung der unterschiedlichen Übersetzungsverhältnisse gekoppelt werden können. In diesem Fall verfügt das Mehrganggetriebe über mehrere Eingangswellen, die jeweils je einer der Elektromaschinen zugeordnet sind. Eine Verbindung zu dem nachgeschalteten Getriebe ist dann bevorzugt an einer einzelnen Ausgangswelle des Mehrganggetriebes hergestellt. Alternativ dazu kann aber auch jeder Elektromaschine je ein Mehrganggetriebe zugeordnet sein, wodurch dann das nachgeschaltete Getriebe an seiner Eingangsseite insbesondere mit mehreren Antriebswellen auszustatten ist, an denen jeweils die jeweilige Elektromaschine mit den je zugehörigen, zwischengeschalteten Mehrganggetriebe angebunden ist.

In Weiterbildung der vorgenannten Ausführungsform sind die mindestens eine Elektromaschine und das Mehrganggetriebe zu einer Antriebseinheit zusammengefasst. Hierdurch kann im Bereich der Antriebseinrichtung ein kompakter Aufbau realisiert werden, indem die Elektromaschine und das zugehörige Mehrganggetriebe eine Antriebseinheit bilden. Dabei können die Elektromaschine und das Mehrganggetriebe in einem gemeinsamen Gehäuse aufgenommen sein. Alternativ dazu ist es auch denkbar, dass die Elektromaschine mit ihrem Gehäuse unmittelbar an einem Gehäuse des Mehrganggetriebes befestigt ist. Die Antriebseinheit mit Mehrganggetriebe kann auch in der Form dargestellt sein, dass die Elektromaschinenelemente so groß ausgeführt sind, dass die Mehrganggetriebeelemente im Inneren der Elektromaschinen Platz finden. Dabei kann auch ein Montageaufwand bei der erfindungsgemäßen Antriebseinrichtung reduziert werden, da die aus Elektromaschine und Mehrganggetriebe gebildete Antriebseinheit bereits als vormontierte Einheit vorliegen kann.

Alternativ oder ergänzend zu der vorstehenden Ausführungsform sind die mindestens eine Elektromaschine und das Getriebe zu einem Modul zusammengefasst. Dies hat den Vorteil, dass somit insgesamt eine kompakte Bauweise der erfindungsgemäßen Antriebseinrichtung realisiert werden kann. Ist zwischen der mindestens einen Elektromaschine und dem Getriebe zudem ein Mehrganggetriebe vorgesehen, so ist auch dieses Mehrganggetriebe bevorzugt Teil des Moduls und dabei zwischen Elektromaschine und Getriebe platziert. Hinsichtlich der Möglichkeiten des Aufbaus, der Anordnung und der Einbindung eines Mehrganggetriebes kann dabei eine der im Vorfeld bereits beschriebenen Varianten verwirklicht sein.

Entsprechend einer alternativen Ausgestaltungsmöglichkeit liegen die mindestens eine Elektromaschine und das Getriebe als separate Einheiten vor, wobei eine Verbindung zwischen diesen Einheiten über eine Gelenkwelle hergestellt ist. Dadurch ist es möglich, die Elektromaschine und das Getriebe innerhalb der Antriebseinrichtung auch unter einem Abstand zueinander anzuordnen, wobei eine Zuführung einer Antriebsleistung der mindestens einen Elektromaschine zum Getriebe oder auch eine Einleitung einer Antriebsbewegung vom Getriebe in die mindestens eine Elektromaschine in deren generatorischen Betrieb über die zwischenliegende Gelenkwelle vollzogen ist. Die Koppelung mit dem Getriebe kann dabei auch bei der Ausführungsform verwirklicht sein, bei welcher zwischen der mindestens einen Elektromaschine und dem Getriebe ein Mehrganggetriebe vorgesehen ist. Dabei kann dieses Mehrganggetriebe mit der Elektromaschine zu einer Antriebseinheit zusammengefasst sein, wobei die Gelenkwelle dann eine Abtriebsseite des Mehrganggetriebes mit der Eingangsseite des Getriebes verbindet. Alternativ dazu kann das Mehrganggetriebe aber auch auf Seiten des Getriebes platziert sein, wobei in diesem Fall die Gelenkwelle dann eine Abtriebsseite der mindestens einen Elektromaschine mit einer Antriebsseite des Mehrganggetriebes verbindet.

In Weiterbildung der Erfindung sind die Eingangsseite und die Ausgangsseite des Getriebes über mindestens eine Stirnradstufe miteinander gekoppelt. Hierdurch kann in vorteilhafter Weise zum einen eine permanente Koppelung von Eingangsseite und Ausgangsseite des Getriebes verwirklicht sowie zum anderen der Achsversatz zwischen eingangsseitigen Ausgangsseite dargestellt werden.

Gemäß einer weiteren Ausführungsform der Erfindung umfasst die Verteilereinrichtung ein Differentialgetriebe, welches insbesondere als Kegelraddifferential oder als Planetendifferential vorliegt. Dabei kann über das Differentialgetriebe eine Antriebsleistung auf Abtriebswellen aufgeteilt werden, die jeweils mit je einem der Abtriebe in Verbindung stehen. Die Verwendung eines Differentialgetriebes hat den Vorteil, dass eine permanente Aufteilung eines Antriebsmoments auf die Abtriebe und damit im verbauten Zustand des Verteilergetriebes auch auf die jeweiligen Antriebsachsen unter möglichem Ausgleich von Drehzahldifferenzen vorgenommen wird. Hierdurch ist das Verteilergetriebe auch für ein Kraftfahrzeug mit permanentem Allrad konzipiert. Dabei wird im Falle einer Ausführung als Kegelraddifferential eine gleichmäßige Momentenaufteilung realisiert, während bei Ausgestaltung des Differentialgetriebes als Planetendifferential auch eine ungleichmäßige Aufteilung möglich ist.

Dem Differentialgetriebe kann im Rahmen der Erfindung zudem eine Sperreinrichtung zugeordnet sein, über welche bei Betätigung eine starre Verbindung zwischen den Abtriebswellen herbeigeführt wird und damit eine Ausgleichswirkung des Differentialgetriebes aufgehoben ist. Besonders bevorzugt wird diese Sperreinrichtung dabei automatisch betätigt, wobei der Sperreinrichtung dabei weiter bevorzugt Sensoren zugeordnet sind, die Drehzahlen an den Abtrieben erfassen. Basierend auf den erfassten Drehzahlen kann die Sperreinrichtung dann bei Vorliegen mindestens eines Kriteriums ein automatisches Sperren des Differentialgetriebes vornehmen.

Alternativ zu der vorgenannten Ausführungsform ist eine Eingangsseite der Verteilereinrichtung permanent mit einem ersten Abtrieb gekoppelt, wohingegen ein zweiter Abtrieb über eine Kupplung mit dem ersten Abtrieb verbunden werden kann. Bei dieser Variante ist also nur der erste Abtrieb permanent mit der Eingangsseite der Verteilereinrichtung und damit auch mit dem vorgeschalteten Getriebe gekoppelt, während der zweite Abtrieb in einem geöffneten Zustand der Kupplung von der Eingangsseite der Verteilereinrichtung und auch dem ersten Abtrieb entkoppelt ist. Wird dann allerdings die Kupplung in einen betätigten Zustand überführt, so sind die Abtriebe starr miteinander verbunden und rotieren dementsprechend mit derselben Drehzahl. In diesem Fall wird dann ein an der Eingangsseite der Verteilereinrichtung eingeleitetes Antriebsmoment gleichmäßig und mit gleicher Drehzahl auf die beiden Abtriebe aufgeteilt. Dadurch ist das erfindungsgemäße Verteilergetriebe für einen Kraftfahrzeugantriebsstrang eines Elektrofahrzeugs mit zuschaltbarem Allradantrieb ausgestaltet.

Bei der vorstehend beschriebenen Variante können an den Abtrieben Sensoren vorgesehen sein, um eine jeweilige Drehzahl des einzelnen Abtriebs zu erfassen. Weiter bevorzugt ist dann eine Betätigungseinrichtung vorgesehen, über welche die Kupplung automatisch betätigt werden kann, wenn aufgrund der erfassten Drehzahlen ein jeweiliges Kriterium als erfüllt erkannt wird. Letztendlich wird hierdurch also ein automatisches Zuschalten einer Antriebsachse bei Erfassung bestimmter Bedingungen verwirklicht.

Gegenstand der Erfindung ist zudem ein Kraftfahrzeugantriebsstrang für ein Elektrofahrzeug, welcher eine Antriebseinrichtung nach einer oder mehrere der vorgenannten Varianten aufweist. In vorteilhafter Weise kann hierdurch ein Antriebsstrang für ein Elektrofahrzeug mit Allradantrieb oder zuschaltbarem Allradantrieb verwirklicht werden, wobei dabei eine ausreichende Bodenfreiheit für ein geländegängiges Elektrofahrzeug realisiert wird.

In Weiterbildung eines erfindungsgemäßen Kraftfahrzeugantriebsstranges ist dabei mit einem Abtrieb der Antriebseinrichtung mindestens eine antreibbare Vorderachse und einem anderen Abtrieb der Antriebseinrichtung mindestens eine antreibbare Hinterachse trieblich verbunden. Besonders bevorzugt ist bei dem Antriebsstrang genau eine antreibbare Vorderachse und genau eine antreibbare Hinterachse vorgesehen, wobei die Vorderachse und die Hinterachse jeweils mit dem zugehörigen Abtrieb der erfindungsgemäßen Antriebseinrichtung in Verbindung stehen. Besonders bevorzugt ist eine triebliche Verbindung zwischen einem Abtrieb der Antriebseinrichtung und einer Antriebsachse über eine zwischenliegende Gelenkwelle hergestellt.

Die Erfindung betrifft zudem ein Elektrofahrzeug, bei welchem es sich besonders bevorzugt um ein Nutzfahrzeug handelt. Dabei ist dieses Elektrofahrzeug mit einem Antriebsstrang entsprechend einer oder mehrerer der vorgenannten Ausgestaltungsmöglichkeiten ausgestattet. Das Elektrofahrzeug ist dabei insbesondere als geländegängiges Fahrzeug konzipiert.

Vorteilhafte Ausführungsformen der Erfindung, die nachfolgend erläutert werden, sind in den Zeichnungen dargestellt. Es zeigt:
- Fig. 1: eine schematische Darstellung eines Elektrofahrzeugs entsprechend einer bevorzugten Ausführungsform der Erfindung;
- Fig. 2: eine schematische Ansicht einer Antriebseinrichtung entsprechend einer ersten Ausführungsform der Erfindung;
- Fig. 3: eine Seitenansicht der Antriebseinrichtung aus Fig. 2;
- Fig. 4: eine schematische Darstellung einer Antriebseinrichtung gemäß einer zweiten Ausgestaltungsmöglichkeit der Erfindung;
- Fig. 5: eine Seitenansicht der Antriebseinrichtung aus Fig. 4; und
- Fig. 6 bis 8: schematische Ansichten möglicher Ausgestaltungen einer Verteilereinrichtung der Antriebseinrichtungen aus den Fig. 2 und 3 oder den Fig. 4 und 5.

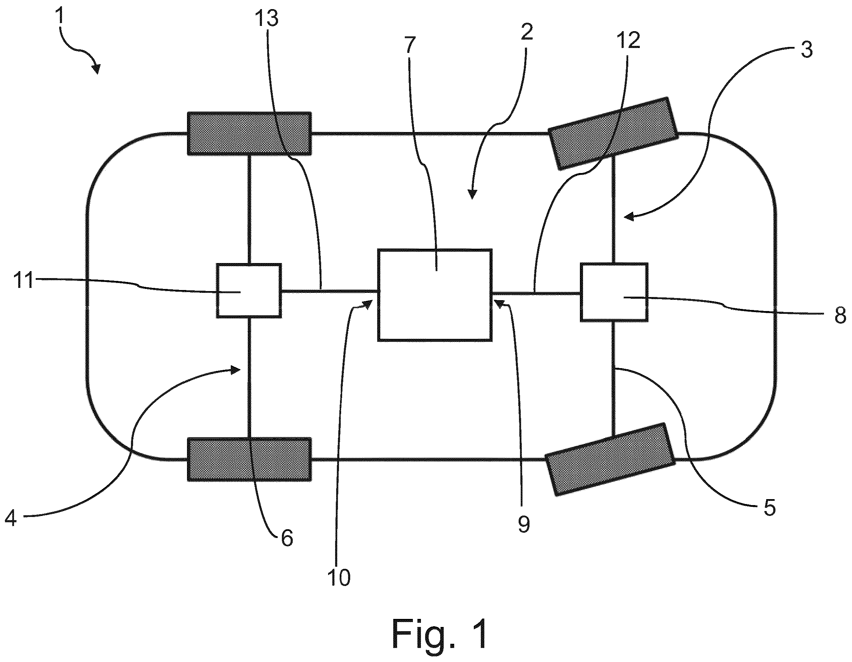

Fig. 1 zeigt eine schematische Ansicht eines Elektrofahrzeugs 1, bei welchem es sich insbesondere um ein geländefähiges Nutzfahrzeug handelt. Das Elektrofahrzeug 1 weist dabei einen Kraftfahrzeugantriebsstrang 2 auf, welcher mit zwei Antriebsachsen 3 und 4 ausgestattet ist. Dabei handelt es sich bei der Antriebsachse 3 um eine lenkbare Vorderachse 5 und bei der Antriebsachse 4 um eine nicht lenkbare Hinterachse 6. Insofern ist das Elektrofahrzeug 1 mit einem permanenten oder zuschaltbaren Allradantrieb ausgestattet.

Innerhalb des Antriebsstranges 2 können die beiden Antriebsachsen 3 und 4 über eine Antriebseinrichtung 7 angetrieben werden, welche in Längsrichtung des Elektrofahrzeugs 1 zwischen den Antriebsachsen 3 und 4 platziert ist. Konkret ist dabei ein Achsdifferential 8 der Antriebsachse 3 an einem Abtrieb 9 der Antriebseinrichtung 7 angebunden, wobei die Antriebseinrichtung 7 zudem an einem Abtrieb 10 mit einem Achsdifferential 11 der Antriebsachse 4 in Verbindung steht. Eine jeweilige Verbindung des jeweiligen Abtriebs 9 bzw. 10 mit dem jeweiligen Achsdifferential 8 bzw. 11 der jeweiligen Antriebsachse 3 bzw. 4 ist dabei über jeweils eine zwischenliegende Gelenkwelle 12 bzw. 13 hergestellt.

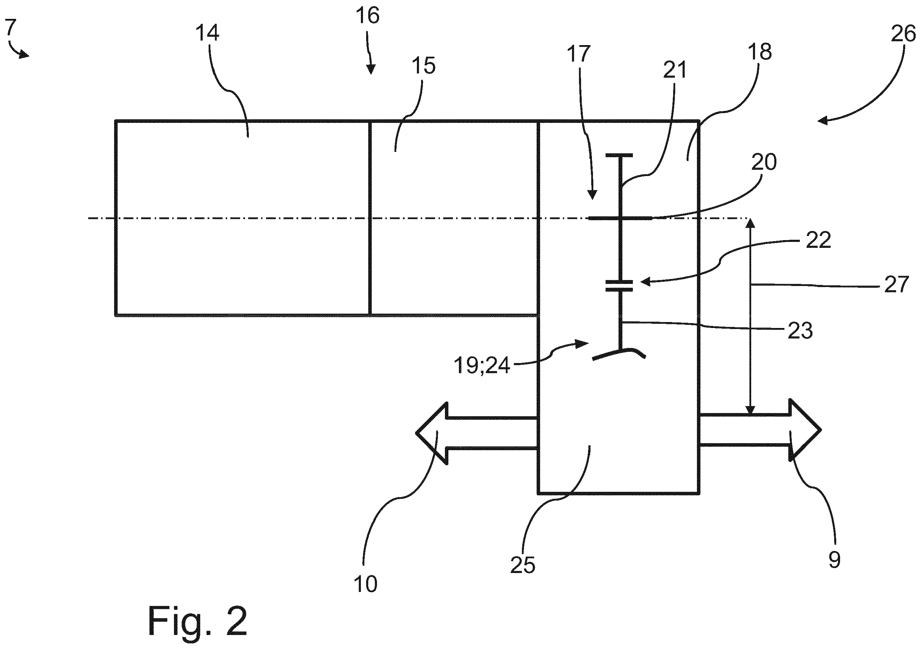

Fig. 2 zeigt eine schematische Einzelansicht der Antriebseinrichtung 7, wobei diese Antriebseinrichtung 7 dabei entsprechend einer ersten Ausführungsform der Erfindung ausgebildet ist. Diese Antriebseinrichtung 7 umfasst eine Elektromaschine 14, welche sich - vorliegend nicht weiter zu sehen - aus einem Stator und einem Rotor zusammensetzt. Die Elektromaschine 14 kann dabei zum einen als Generator sowie zum anderen als Elektromotor betrieben werden.

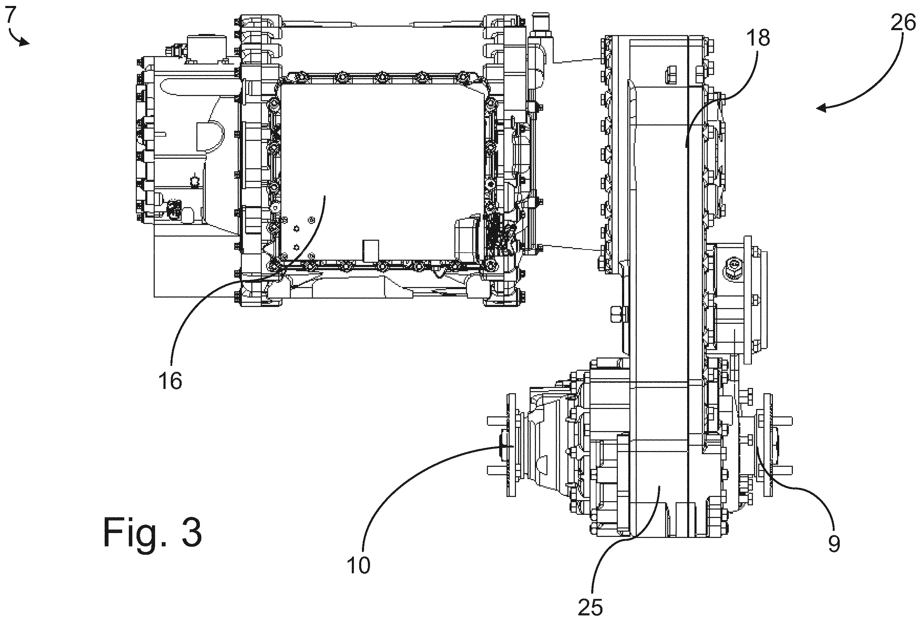

Der Rotor der Elektromaschine 14 steht bevorzugt über eine Rotorwelle mit einer Antriebsseite eines nachgeschalteten Mehrganggetriebes 15 in Verbindung, wobei das Mehrganggetriebe 15 dabei, wie in Fig. 3 zu erkennen ist, mit der Elektromaschine 14 zu einer Antriebseinheit 16 zusammengefasst ist. Bei dem Mehrganggetriebe 15 können dabei unterschiedliche Übersetzungsverhältnisse zwischen der Antriebsseite und einer Abtriebsseite des Mehrganggetriebes 15 geschaltet werden, wobei das Mehrganggetriebe 15 zur Darstellung dieser unterschiedlichen Übersetzungsverhältnisse mit Planetenradsätze und/oder Stirnradstufen ausgestattet ist. Bevorzugt können die Übersetzungsverhältnisse dabei durch selektive Betätigung von Schaltelementen geschaltet werden, die im Einzelnen als kraftschlüssige Schaltelemente oder als formschlüssige Schaltelemente ausgestaltet sein können.

Die Abtriebsseite des Mehrganggetriebes 15 steht mit einer Eingangsseite 17 eines nachgeschalteten Getriebes 18 in Verbindung, in welchem permanent eine an der Eingangsseite 17 eingeleitete Antriebsbewegung zu einer Ausgangsseite 19 des Getriebes 18 übersetzt wird. Die Eingangsseite 17 des Getriebes 18 ist dabei durch eine Welle 20 gebildet, auf welcher ein Stirnrad 21 einer Stirnradstufe 22 drehfest angeordnet ist. Dieses Stirnrad 21 steht dabei mit einem Stirnrad 23 der Stirnradstufe 22 im Zahneingriff, wobei das Stirnrad 23 zum einen die Ausgangsseite 19 des Getriebes 18 sowie zum anderen auch eine Eingangsseite 24 einer auf das Getriebe 18 folgenden Verteilereinrichtung 25 bildet. Die Verteilereinrichtung 25 ist dabei mit dem Getriebe 18 und der Antriebseinheit 16 bestehend aus Elektromaschine 14 und Mehrganggetriebe 15 zu einem Modul 26 zusammengefasst, indem die Verteilereinrichtung 25 und das Getriebe 18 in einem Gehäuse zusammengefasst sind, an welchem auch die Antriebseinheit 16 unmittelbar angeordnet ist. Letzteres ist dabei insbesondere in Fig. 3 zu erkennen.

Um bei dem geländegängigen Elektrofahrzeug 1 aus Fig. 1 eine möglichst große Bodenfreiheit zu realisieren, liegen die Eingangsseite 17 und die Ausgangsseite 19 des Getriebes 18 in Hochrichtung unter einem Achsversatz 27 zueinander, wodurch auch die Antriebseinheit 16 gegenüber den Abtrieben 9 und 10 höher liegend angeordnet ist.

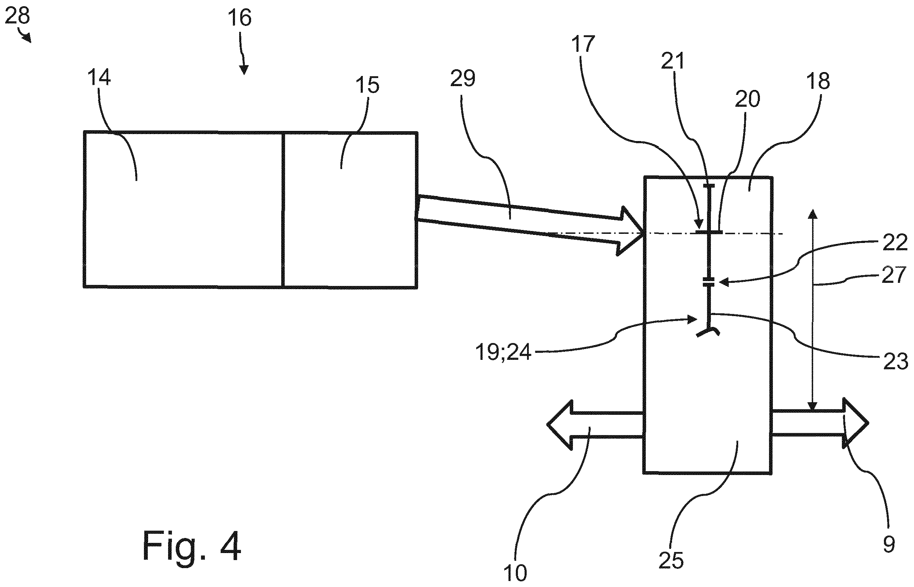

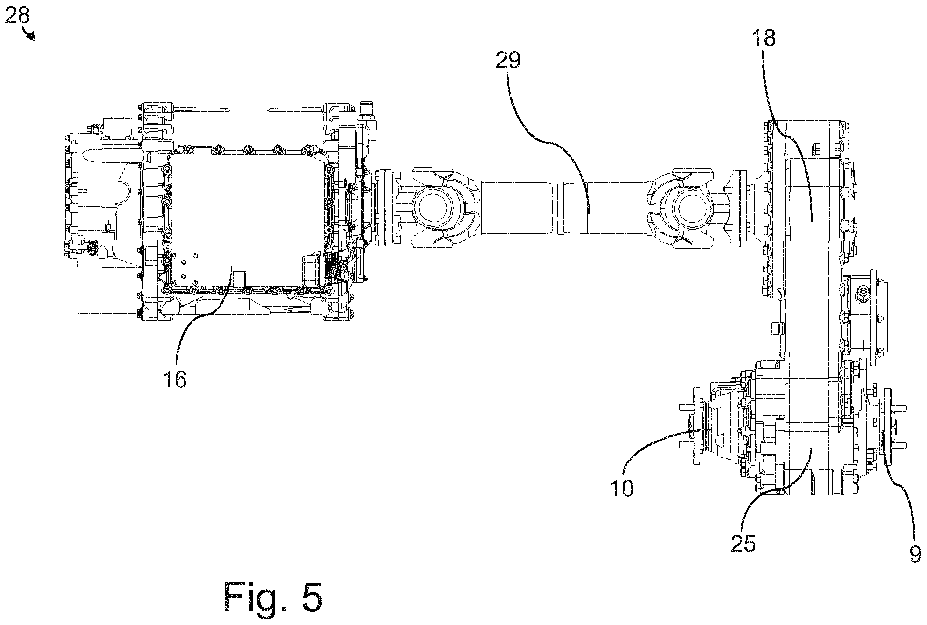

Ferner zeigen die Fig. 4 und 5 Ansichten einer Antriebseinrichtung 28, welche entsprechend einer zweiten Ausgestaltungsmöglichkeit der Erfindung ausgebildet ist und ebenfalls bei dem Kraftfahrzeugantriebsstrang 2 in Fig. 1 zur Anwendung kommen kann. Dabei entspricht diese Antriebseinrichtung 28 im Wesentlichen der Antriebseinrichtung 7 nach den Fig. 2 und 3, mit dem Unterschied, dass die aus Elektromaschine 14 und Mehrganggetriebe 15 gebildete Antriebseinheit 16 als separate Einheit zu dem Getriebe 18 und der Verteilereinrichtung 25 angeordnet ist. Eine Verbindung zwischen der Antriebseinheit 16 und der Eingangsseite 17 des Getriebes 18 ist dabei über eine Gelenkwelle 29 hergestellt. In der Folge kann die Antriebseinheit 16 auch gegenüber der Eingangsseite 17 in Hochrichtung weiter nach oben versetzt platziert werden. Ansonsten entspricht die Ausgestaltungsmöglichkeit nach den Fig. 4 und 5 der Variante nach den Fig. 2 und 3, so dass auf das hierzu Beschriebene Bezug genommen wird.

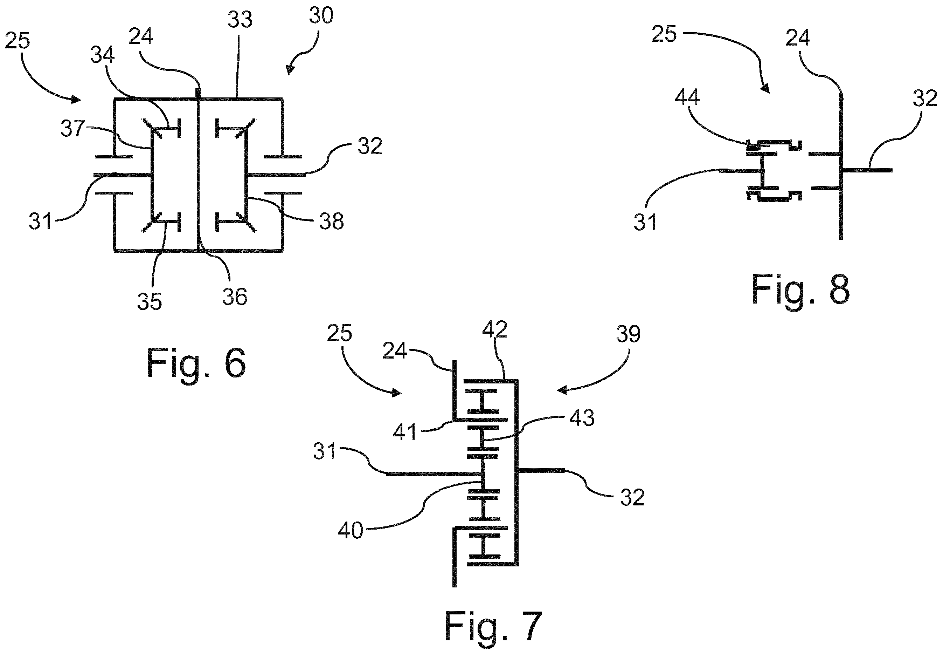

Die Fig. 6 bis 8 zeigen mögliche Ausgestaltungen der Verteilereinrichtung 25, wie sie jeweils bei den Antriebseinrichtungen 7 und 28 aus den Fig. 2 und 3 bzw. den Fig. 4 und 5 verwirklicht sein können. Dabei zeigt Fig. 6 eine Ausführung der Verteilereinrichtung 25, bei welcher die Verteilereinrichtung 25 ein Kegelraddifferential 30 aufweist, über welches eine an der Eingangsseite 24 der Verteilereinrichtung 25 eingeleitete Antriebsleistung auf Abtriebswellen 31 und 32 verteilt wird, die jeweils die Abtriebe 9 und 10 ausbildet. Dabei ist die Eingangsseite 24 in Form des Stirnrades 23 drehfest mit einem Differentialkorb 33 des Kegelraddifferentials 30 verbunden.

In dem Differentialkorb 33 sind zwei Ausgleichskegelräder 34 und 35 auf einem Bolzen 36 drehbar gelagert, wobei die Ausgleichskegelräder 34 und 35 jeweils mit Abtriebskegelrädern 37 und 38 kämmen, die jeweils drehfest auf je einer der Abtriebswelle 31 und 32 platziert sind. Über das Kegelraddifferential 30 wird dabei eine gleichmäßige Momentenaufteilung auf die beiden Abtriebe 9 und 10 unter möglichem Ausgleich von Drehzahldifferenzen vorgenommen.

Hingegen zeigt Fig. 7 eine Variante der Verteilereinrichtung 25, bei welcher die Verteilereinrichtung 25 ein Planetendifferential 39 aufweist. Das Planetendifferential 39 setzt sich aus einem Sonnenrad 40, einem Planetensteg 41 und einem Hohlrad 42 zusammen, wobei in dem Planetensteg 41 mehrere Planetenräder 43 drehbar gelagert sind, die jeweils sowohl mit dem Sonnenrad 40, als auch dem Hohlrad 42 im Zahneingriff stehen.

Der Planetensteg 41 ist dabei drehfest mit der Eingangsseite 24 in Form des Stirnrades 23 verbunden. Während das Sonnenrad 40 drehfest mit der Abtriebswelle 31 verbunden ist, steht das Hohlrad 42 drehfest mit der Abtriebswelle 32 in Verbindung. Auch bei dem Planetendifferential 39 findet dabei eine Momentenaufteilung auf die Abtriebe 9 und 10 unter möglichem Ausgleich von Drehzahldifferenzen statt, wobei im Unterschied zu dem Kegelraddifferential 30 hierbei aber eine ungleichmäßige Momentenaufteilung möglich ist.

Bei der in Fig. 8 gezeigten Ausgestaltungsmöglichkeit der Verteilereinrichtung 25 ist die Abtriebswelle 32 permanent mit der Eingangsseite 24 der Verteilereinrichtung 25 verbunden. Hingegen kann Abtriebswelle 31 über eine zwischenliegende Kupplung 44 drehfest mit der Abtriebswelle 32 und damit auch der Eingangsseite 24 verbunden werden, wodurch eine an der Eingangsseite 24 eingeleitete Antriebsleistung gleichmäßig auf die beiden Abtriebswellen 31 und 32 verteilt wird. Ein Ausgleich von Drehzahldifferenzen findet hierbei nicht statt. Im Unterschied zu den beiden vorhergehenden Variante nach Fig. 6 oder 7 ist bei der Ausführung der Verteilereinrichtung 25 gemäß Fig. 8 zudem kein permanenter Allradantrieb realisiert, da in einem geöffneten Zustand der Kupplung 44 kein Kraftfluss auf die Abtriebswelle 31 und damit zu dem Abtrieb 10 stattfindet. Im Falle der Ausführung nach Fig. 6 ist der Allradantrieb durch Betätigung der Kupplung 44 zuschaltbar.

Mittels der erfindungsgemäßen Ausgestaltungen einer Antriebseinrichtung kann ein kompakter Antrieb eines geländegängigen Elektrofahrzeugs bei hoher Bodenfreiheit verwirklicht werden.

### Bezugszeichen

- 1: Elektrofahrzeug
- 2: Kraftfahrzeugantriebsstrang
- 3: Antriebsachse
- 4: Antriebsachse
- 5: Vorderachse
- 6: Hinterachse
- 7: Antriebseinrichtung
- 8: Achsdifferential
- 9: Abtrieb
- 10: Abtrieb
- 11: Achsdifferential
- 12: Gelenkwelle
- 13: Gelenkwelle
- 14: Elektromaschine
- 15: Mehrganggetriebe
- 16: Antriebseinheit
- 17: Eingangsseite
- 18: Getriebe
- 19: Ausgangsseite
- 20: Welle
- 21: Stirnrad
- 22: Stirnradstufe
- 23: Stirnrad
- 24: Eingangsseite
- 25: Verteilereinrichtung
- 26: Modul
- 27: Achsversatz
- 28: Antriebseinrichtung
- 29: Gelenkwelle
- 30: Kegelraddifferential
- 31: Abtriebswelle
- 32: Abtriebswelle
- 33: Differentialkorb
- 34: Ausgleichskegelrad
- 35: Ausgleichskegelrad
- 36: Bolzen
- 37: Abtriebskegelrad
- 38: Abtriebskegelrad
- 39: Planetendifferential
- 40: Sonnenrad
- 41: Planetensteg
- 42: Hohlrad
- 43: Planetenräder
- 44: Kupplung

## Patentansprüche

1. Antriebseinrichtung (7; 28) für einen Kraftfahrzeugantriebsstrang (2) eines Elektrofahrzeugs (1), umfassend mindestens eine Elektromaschine (14) als Antriebsmaschine, der abtriebsseitig ein Getriebe (18) nachgeschaltet ist, wobei bei dem Getriebe (18) eine Eingangsseite (17) und eine Ausgangsseite (19) unter Achsversatz (27) zueinander liegen, und wobei die Ausgangsseite (19) des Getriebes (18) mit einer Verteilereinrichtung (25) in Verbindung steht, welcher mehrere Abtriebe (9, 10) zugeordnet sind, die im Kraftfahrzeugantriebsstrang (2) jeweils der Anbindung je einer Antriebsachse (3, 4) des Elektrofahrzeugs (1) dienen, **dadurch gekennzeichnet, dass** die Ausgangsseite (19) des Getriebes (18) in einer Hochrichtung gegenüber der Eingangsseite (17) des Getriebes (18) nach unten versetzt liegt.

2. Antriebseinrichtung (7; 28) nach Anspruch 1, **dadurch gekennzeichnet, dass** zwischen der mindestens einen Elektromaschine (14) und dem Getriebe (18) ein Mehrganggetriebe (15) vorgesehen ist, über welches unterschiedliche Übersetzungsverhältnisse zwischen einer jeweiligen Abtriebsseite der mindestens einen Elektromaschine (14) und der Eingangsseite (17) des Getriebes (18) schaltbar sind.

3. Antriebseinrichtung (7; 28) nach Anspruch 2, **dadurch gekennzeichnet, dass** die mindestens eine Elektromaschine (14) und das Mehrganggetriebe (15) zu einer Antriebseinheit (16) zusammengefasst sind.

4. Antriebseinrichtung (7) nach einem der Ansprüche 1 bis 3, **dadurch gekennzeichnet, dass** die mindestens eine Elektromaschine (14) und das Getriebe (18) zu einem Modul (26) zusammengefasst sind.

5. Antriebseinrichtung (28) nach einem der Ansprüche 1 bis 3, **dadurch gekennzeichnet, dass** die mindestens eine Elektromaschine (14) und das Getriebe (18) als separate Einheiten vorliegen, wobei eine Verbindung zwischen diesen Einheiten über eine Gelenkwelle (29) hergestellt ist.

6. Antriebseinrichtung (7; 28) nach einem der vorhergehenden Ansprüche, **dadurch gekennzeichnet, dass** die Eingangsseite (17) und die Ausgangsseite (19) des Getriebes (18) über mindestens eine Stirnradstufe (22) miteinander gekoppelt sind.

7. Antriebseinrichtung (7; 28) nach einem der vorhergehenden Ansprüche, **dadurch gekennzeichnet, dass** die Verteilereinrichtung (25) ein Differentialgetriebe, insbesondere ein Kegelraddifferential (30) oder ein Planetendifferential (39), umfasst, wobei über das Differentialgetriebe eine Antriebsleistung auf Abtriebswellen (31, 32) aufteilbar ist, die jeweils mit je einem der Abtriebe (9, 10) in Verbindung stehen.

8. Antriebseinrichtung nach Anspruch 7, **dadurch gekennzeichnet, dass** dem Differentialgetriebe eine Sperreinrichtung zugeordnet ist.

9. Antriebseinrichtung (7; 28) nach einem der Ansprüche 1 bis 6, **dadurch gekennzeichnet, dass** eine Eingangsseite (24) der Verteilereinrichtung (25) permanent mit einem ersten Abtrieb (9) gekoppelt ist, wohingegen ein zweiter Abtrieb (10) über eine Kupplung (44) mit dem ersten Abtrieb (9) verbindbar ist.

10. Kraftfahrzeugantriebsstrang (2) für ein Elektrofahrzeug (1), insbesondere in Form eines Nutzfahrzeuges, umfassend eine Antriebseinrichtung (7; 28) nach einem oder mehreren der Ansprüche 1 bis 9.

11. Kraftfahrzeugantriebsstrang (2) nach Anspruch 10, **dadurch gekennzeichnet, dass** mit einem Abtrieb (9) der Antriebseinrichtung (7; 28) mindestens eine antreibbare Vorderachse (5) und mit einem anderen Abtrieb (10) der Antriebseinrichtung (7; 28) mindestens eine antreibbare Hinterachse (6) trieblich verbunden ist.

12. Elektrofahrzeug (1), insbesondere in Form eines Nutzfahrzeuges, umfassend einen Kraftfahrzeugantriebsstrang (2) nach Anspruch 10 oder 11.

## Claims

1. Drive device (7; 28) for a motor vehicle drive train (2) of an electric vehicle (1), comprising at least one electric machine (14) as a drive machine, which is connected downstream of a gearbox (18) on the output side, wherein, in the gearbox (18), an input side (17) and an output side (19) lie at an axial offset (27) with respect to each other, and wherein the output side (19) of the gearbox (18) is in connected to a distributor (25), which is assigned to a plurality of outputs (9, 10) which, in the motor vehicle drive train (2), each serve for the attachment of a drive axle (3, 4) of the electric vehicle (1), **characterized in that** the output side (19) of the gearbox (18) is offset downwards in a vertical direction with respect to the input side (17) of the gearbox (18).

2. Drive device (7; 28) according to Claim 1, **characterized in that** a multi-speed gearbox (15) is provided between the at least one electric machine (14) and the gearbox (18), via which multi-speed gearbox different transmission ratios between a respective output side of the at least one electric machine (14) and the input side (17) of the gearbox (18) can be selected.

3. Drive device (7; 28) according to Claim 2, **characterized in that** the at least one electric machine (14) and the multi-speed gearbox (15) are combined to form a drive unit (16).

4. Drive device (7) according to any one of Claims 1 to 3, **characterized in that** the at least one electric machine (14) and the gearbox (18) are combined to form a module (26).

5. Drive device (28) according to any one of Claims 1 to 3, **characterized in that** the at least one electric machine (14) and the gearbox (18) are present as separate units, wherein a connection is established between these units via a propeller shaft (29).

6. Drive device (7; 28) according to any one of the preceding claims, **characterized in that** the input side (17) and the output side (19) of the gearbox (18) are coupled to each other via at least one spur gear stage (22).

7. Drive device (7; 28) according to any one of the preceding claims, **characterized in that** the distributor (25) comprises a differential gear, in particular a bevel gear differential (30) or a planetary differential (39), wherein a drive power can be split via the differential gear between output shafts (31, 32), each of which is connected to one of the outputs (9, 10).

8. Drive device according to Claim 7, **characterized in that** the differential gear is assigned a locking device.

9. Drive device (7; 28) according to any one of Claims 1 to 6, **characterized in that** an input side (24) of the distributor (25) is permanently coupled to a first output (9), whereas a second output (10) is connectable via a clutch (44) to the first output (9).

10. Motor vehicle drive train (2) for an electric vehicle (1), in particular in the form of a commercial vehicle, comprising a drive device (7; 28) according to one or more of Claims 1 to 9.

11. Motor vehicle drive train (2) according to Claim 10, **characterized in that** at least one drivable front axle (5) is drive-connected to an output (9) of the drive device (7; 28), and at least one drivable rear axle (6) is drive-connected to another output (10) of the drive device (7; 28).

12. Electric vehicle (1), in particular in the form of a commercial vehicle, comprising a motor vehicle drive train (2) according to Claim 10 or 11.

## Revendications

1. Dispositif d'entraînement (7 ; 28) pour une chaîne cinématique (2) de véhicule automobile d'un véhicule électrique (1), comprenant, en tant que machine d'entraînement, au moins une machine électrique (14), en aval de laquelle est reliée, côté de sortie, une transmission (18), un côté d'entrée (17) et un côté de sortie (19) de la transmission (18) étant situés de manière décalée axialement (27) l'un par rapport à l'autre, et le côté de sortie (19) de la transmission (18) étant en liaison avec un dispositif distributeur (25) qui est associé à de multiples sorties (9, 10) qui, dans la chaîne cinématique de véhicule automobile (2), servent chacune à relier un essieu moteur (3, 4) du véhicule électrique (1), **caractérisé en ce que** le côté de sortie (19) de la transmission (18) est positionné de manière décalée vers le bas dans une direction verticale par rapport au côté d'entrée (17) de la transmission (18).

2. Dispositif d'entraînement (7 ; 28) selon la revendication 1, **caractérisé en ce qu'**il est prévu entre ladite au moins une machine électrique (14) et la transmission (18) une transmission à plusieurs rapports (15) par l'intermédiaire de laquelle différents rapports de transmission peuvent être commutés entre un côté de sortie respectif de ladite au moins une machine électrique (14) et le côté d'entrée (17) de la transmission (18).

3. Dispositif d'entraînement (7 ; 28) selon la revendication 2, **caractérisé en ce que** ladite au moins une machine électrique (14) et la transmission à plusieurs rapports (15) sont combinées en une unité d'entraînement (16).

4. Dispositif d'entraînement (7) selon l'une quelconque des revendications 1 à 3, **caractérisé en ce que** ladite au moins une machine électrique (14) et la transmission (18) sont combinées en un module (26).

5. Dispositif d'entraînement (28) selon l'une quelconque des revendications 1 à 3, **caractérisé en ce que** ladite au moins une machine électrique (14) et la transmission (18) se présentent sous forme d'unités séparées, une liaison entre ces unités étant réalisée par l'intermédiaire d'un arbre à cardan (29).

6. Dispositif d'entraînement (7 ; 28) selon l'une quelconque des revendications précédentes, **caractérisé en ce que** le côté d'entrée (17) et le côté de sortie (19) de la transmission (18) sont accouplés l'un à l'autre par l'intermédiaire d'au moins un étage à routes droites (22) .

7. Dispositif d'entraînement (7 ; 28) selon l'une quelconque des revendications précédentes, **caractérisé en ce que** le dispositif distributeur (25) comprend un engrenage différentiel, en particulier un différentiel à engrenages coniques (30) ou un différentiel planétaire (39), une puissance d'entraînement pouvant être répartie par l'intermédiaire de l'engrenage différentiel sur des arbres de sortie (31, 32) qui sont respectivement reliés à chacune des sorties (9, 10).

8. Dispositif d'entraînement selon la revendication 7, **caractérisé en ce qu'**un dispositif de blocage est associé à l'engrenage différentiel.

9. Dispositif d'entraînement (7 ; 28) selon l'une quelconque des revendications 1 à 6, **caractérisé en ce qu'**un côté d'entrée (24) du dispositif distributeur (25) est accouplé en permanence à une première sortie (9), tandis qu'une deuxième sortie (10) peut être reliée à la première sortie (9) par l'intermédiaire d'un embrayage (44) .

10. Chaîne cinématique (2) de véhicule automobile pour un véhicule électrique (1), en particulier sous la forme d'un véhicule utilitaire, comprenant un dispositif d'entraînement (7 ; 28) selon l'une ou plusieurs des revendications 1 à 9.

11. Chaîne cinématique (2) de véhicule automobile selon la revendication 10, **caractérisée en ce qu'**au moins un essieu avant (5) pouvant être entraîné est relié de manière cinématique à une sortie (9) du dispositif d'entraînement (7 ; 28) et **en ce qu'**au moins un essieu arrière (6) pouvant être entraîné est relié de manière cinématique à une autre sortie (10) du dispositif d'entraînement (7 ; 28).

12. Véhicule électrique (1), en particulier sous la forme d'un véhicule utilitaire, comprenant une chaîne cinématique de véhicule automobile (2) selon la revendication 10 ou 11.
